# EUROPÄISCHE PATENTSCHRIFT

(11) **EP 3 592 448 B1**
(45) Veröffentlichungstag und Bekanntmachung des Hinweises auf die Patenterteilung: **27.04.2022**
(21) Anmeldenummer: 18717229.1
(22) Anmeldetag: 08.03.2018
(51) Int. Cl.: B01D 45/16, B04C 5/181, B04C 5/185

(54) **ABTRENNVORRICHTUNG ZUR ABTRENNUNG FESTER PARTIKEL AUS EINER FLÜSSIGKEIT, INSBESONDERE AUS EINEM KÜHLSCHMIERSTOFF**
SEPARATION DEVICE FOR SEPARATING SOLID PARTCLES FROM A LIQUID, IN PARTICULAR FROM A COOLANT LUBRICANT
DISPOSITIF DE SÉPARATION SERVANT À SÉPARER DES PARTICULES SOLIDES D'UN LIQUIDE, EN PARTICULIER D'UN LUBRIFIANT RÉFRIGÉRANT

(30) Priorität: 08.03.2017 DE 102017002408
(43) Veröffentlichungstag der Anmeldung: 15.01.2020
(73) Patentinhaber: NewFluid GmbH, 68165 Mannheim (DE)
(72) Erfinder: TILZ, Wolfgang, 68723 Schwetzingen (DE)
(74) Vertreter: Wohlfahrt, Jan Günther
(86) Internationale Anmeldenummer: PCT/EP2018/055734
(87) Internationale Veröffentlichungsnummer: WO 2018/162631

(56) Entgegenhaltungen:
- DE-A1- 4 319 014
- DE-U1- 29 908 567
- JP-A- 2012 236 139
- JP-A- 2014 117 650
- US-A- 6 162 355
- US-A1- 2001 002 009
- US-A1- 2010 037 572
- US-A1- 2013 134 108

## Beschreibung

Die vorliegende Erfindung betrifft eine Abtrennvorrichtung zur Abtrennung fester Partikel, insbesondere mit einer Dichte vom mindestens 2 g/cm³, beispielsweise aus Grafit, aus einer Flüssigkeit oder einem Gas, insbesondere aus einem Kühlschmierstoff (KSS), umfassend einen Fliehkraftabscheider und einen Auffangbehälter. Die Erfindung betrifft auch die Verwendung der erfindungsgemäßen Abtrennvorrichtung zur Abtrennung fester Partikel, insbesondere aus Grafit aus einer Flüssigkeit oder einem Gas, insbesondere aus einem Kühlschmierstoff und Verfahren zur Abtrennung fester Partikel, insbesondere aus Grafit, aus einer Flüssigkeit oder einem Gas, insbesondere aus einem Kühlschmierstoff, mittels der erfindungsgemäßen Abtrennvorrichtung. Die Erfindung betrifft auch Filteranlagen und Werkzeugmaschinen, die eine erfindungsgemäße Abtrennvorrichtung aufweisen.

Zerspanungsmaschinen, beispielsweise Drehmaschinen, Fräsmaschinen oder Schleifmaschinen sind Werkzeugmaschinen, die meistens unter Zuhilfenahme eines Kühlschmiermittels beziehungsweise Kühlschmierstoffs (KSS) arbeiten. Die Kühlschmiermittel oder Kühlschmierstoffe sollen beim Trennen und Umformen von Werkstoffen durch Schmierung Reibung vermindern, durch Kühlung Wärme abführen, durch Spülen Späne transportieren, die Standzeit der Werkzeuge erhöhen und die Oberflächen der Werkstücke verbessern. Dabei müssen die Kühlschmierstoffe regelmäßig gereinigt werden, da sich in den Kühlschmierstoffen Verschmutzungspartikel, beispielsweise Metallspäne, ansammeln. Kühlschmierstoffe werden häufig in Form von Emulsionen verwendet. Zur Aufreinigung der Kühlschmierstoffe werden Filter, beispielsweise Bandfilter, Separatoren und Magnetabscheider verwendet. Eine Filteranlage zum Entfernen von Metallabrieben aus Kühlschmierstoffen ist beispielsweise aus der WO 2014/198867 A2 bekannt. Insbesondere bei der Bearbeitung von grafithaltigen Eisengusswerkstoffen, wie beispielsweise Graugusseisen, wird der Kühlschmierstoff auch mit Grafit verunreinigt. Zur Aufreinigung von mit Grafit verunreinigten Kühlschmierstoffen werden bislang beispielsweise Zentrifugalseparatoren oder Filter eingesetzt. Motorisch angetriebene Separatoren haben einen hohen elektrischen Energieverbrauch, da der Separator mit mehreren 1000 Umdrehungen pro Minute die Partikel aus dem Kühlschmierstoff herausschleudert. Dabei werden nicht nur Partikel separiert, sondern auch Bestandteile des Kühlschmierstoffs wie Öle.

Beim Filtrieren, beispielsweise mit einem Bandfilter, wird der Kühlschmierstoff mittels Saugpumpe aus der Maschinenwanne und dann mit einer Schwallbrause auf das Filtervlies geleitet, um beim Durchfließen des Filterbands mittels Schwerkraft alle Partikel, die größer sind als die Maschenweite zurückzuhalten. Alle Partikel, die kleiner sind, werden hindurchgespült und landen in der Pufferwanne. Auch haftet der Kühlschmierstoff auf den Filterbandvlies, der dann nach Gebrauch verloren geht und mitentsorgt werden muss. Beim Einsatz von Filterkerzen werden alle Partikel zurückgehalten, die größer als die Poren oder Maschenweite des Filters sind. Sind alle Filterporen belegt, muss der Filter ausgetauscht oder aufwendig gereinigt werden.

Die JP 2014/117650 A offenbart einen Saugsammler umfassend: ein luftdichtes Gehäuse mit einem Behälterkörper mit einer Öffnung an einer oberen Kante dort und einem abdichtenden Deckelteil, der die Öffnung öffnen und schließen kann und die Öffnung luftdicht verschließt; und ein Sauggebläse, das eine Saug- und Druckreduzierung im Gehäuse durchführt. An der Unterseite des Deckelteils ist ein Anschlussteil mit einer im Wesentlichen kreisförmigen Ringform vorgesehen, und der beutelartige Körper ist in den Anschlussteil so eingepasst, dass er lösbar befestigt ist, wodurch der beutelartige Körper in das Gehäuse eingebaut wird. Ein Ansaugöffnungsteil und ein Eingangsöffnungsteil, durch die angesaugte Substanz in den beutelartigen Körper zugeführt wird, sind in einem Innenbereich des Anschlussteils im Deckelteil vorgesehen, und die Ansaugöffnung und ein Gebläse sind miteinander durch erste Saugleitung. Ein Sauganschlussteil ist in einem Außenbereich des Anschlussteils im Deckelteil vorgesehen, und der Sauganschlussteil und die erste Saugrohrleitung sind durch eine zweite Saugrohrleitung miteinander verbunden.

Die US 2013/134108 A1 offenbart eine Vorrichtung zum Trennen von Sand oder anderen Feststoffen aus Öl oder anderen Flüssigkeiten, die aus einem Bohrloch gefördert werden, wobei die Vorrichtung umfasst: eine allgemein zylindrische Trennkammer mit einer vertikal ausgerichteten Achse; einen Einlass zur Trennkammer, wobei der Einlass tangential in Bezug auf die Trennkammer ausgerichtet ist und wobei bewirkt wird, dass Fluid, das durch den Einlass in die Trennkammer eintritt, auf einem im Allgemeinen kreisförmigen Weg innerhalb der Trennkammer strömt; und einen Auslass aus der Trennkammer, wobei eine Öffnung des Auslasses innerhalb der Trennkammer in einem zentralen Abschnitt der Trennkammer positioniert ist.

Die US 2001/002009 A1 offenbart einen Hydrozyklonabscheider, umfassend ein kegelstumpfförmiges Gefäß mit einem tangentialen Fluidstromeinlass, einem Fluidstromauslass, einem Feststoffpartikelsammler und einem zylindrischen Einlassrohr, das die kegelstumpfförmigen kegelförmiges Gefäß zum Feststoffpartikelsammler, dadurch gekennzeichnet, dass zwischen dem kegelstumpfförmigen Gefäß und dem zylindrischen Einlaufrohr mit seinem schmalen Spitzenende innerhalb des Einlassrohrs aufgehängt von den Wänden des Einlassrohrs.

Die US 2010/037572 A1 offenbart einen Unterdruck-Staubsammler mit einem leicht aufblasbaren Staubauffangbeutel, wobei der Unterdruck-Staubsammler eine Belüftungshaube umfasst, die mit einem oben angeordneten Motor versehen ist, mehrere Lüfterflügel, die innerhalb der Belüftungshaube angeordnet sind, um mit dem Motor schwenkbar verbunden zu sein, Rohr, das vertikal unter den Ventilatorflügeln befestigt ist, ein erster Ausgang, der in einem Boden der Lüftungshaube gebildet ist, ein Staubsammelbehälter, der direkt unter dem ersten Ausgang positioniert und mit einem darin eingesetzten Staubauffangbeutel zum Aufnehmen von vergleichsweise schweren Staubpartikeln versehen ist, ein zweiter Ausgang an einer oberen dichten Seite gebildet, einen Einlass an einer linken Seite der Lüftungshaube gebildet, einen Staubsammelbeutel, der mit dem zweiten Ausgang verbunden ist, wobei der Staubkollektor gekennzeichnet ist durch: eine Absaugvorrichtung, die aus einem Belüftungsrohr und einem flexiblen Rohr besteht, wobei das Belüftungsrohr in die Belüftungshaube durch ein Durchgangsloch eingeführt wird, das in eine rechte Zwischenwand der Belüftungshaube gebohrt wurde, wobei ein Teil außerhalb der Belüftungshaube verblieben ist, eine ringförmige Befestigungsbasis befestigt um das Belüftungsrohr herum zum schraubbaren Verbinden mit einer Wand der Belüftungshaube, wobei das Belüftungsrohr mit einem bestimmten Winkel schräg positioniert ist und einen Ausgang an einem oberen Ende hat, um ungefähr einer Mitte einer Öffnung des Saugrohrs der Belüftungshaube zugewandt zu sein und einen Auslass, der in einer unteren Wand ausgebildet ist, wobei das flexible Rohr außerhalb der Belüftungshaube installiert ist und sein oberes Ende mit dem Einlass des Belüftungsrohrs verbunden ist, um mit dem Belüftungsrohr zu kommunizieren, und ein unteres Ende mit einer Außenwand des Staubsammeltanks verbunden ist um mit dem Staubsammeltank zu kommunizieren.

Die DE 299 08 567 U1 offenbart einen Auffangbehälter verwendbar bei einem Verfahren für Auffangen von partikelförmigem oder anderem Material in einem Auffangbehälter, wobei das aufgesammelte, eventuell abgeschiedene Material ausgespeist wird, wobei der Auffangbehälter aus einem hauptsächlich gas- oder luftdichtem Material sackförmig ausgestaltet ist, und in ausgedehntem oder gefülltem Zustand einen Hauptteil aufweist mit größerer Querschnittfläche, und einer Eintrittsöffnung.

Der vorliegenden Erfindung liegt das technische Problem zugrunde, eine verbesserte Abtrennvorrichtung für die Aufreinigung von Kühlschmierstoffen, insbesondere von Kühlschmierstoffen in Form von Emulsionen bereitzustellen, insbesondere eine Abtrennvorrichtung, die in verbesserter Weise feste Partikel mit einer Dichte von mindestens 2 g/cm³, beispielsweise Grafitpartikel aus dem Kühlschmierstoff abtrennt. Der vorliegenden Erfindung liegt auch die technische Aufgabe zugrunde, eine Abtrennvorrichtung bereitzustellen, bei der aus einem Kühlschmierstoff abgetrennte Festpartikel, insbesondere mit einer Dichte von mindestens 2 g/cm³, beispielsweise Grafitpartikel und/oder Metallspäne in verbesserter Form aufgefangen werden, insbesondere so abgetrennt werden, dass sie in einfacher und kostengünstiger Weise entsorgt werden können. Dabei soll die Abtrennvorrichtung auch einen möglichst einfachen Aufbau haben und eine gute Wirkleistung zeigen.

Die vorliegende Erfindung löst die ihr zugrundeliegende technische Aufgabe durch eine Abtrennvorrichtung nach Anspruch 1. Die vorliegende Erfindung betrifft insbesondere eine Abtrennvorrichtung zur Abtrennung fester Partikel aus einer Flüssigkeit, umfassend einen Fliehkraftabscheider und einen Auffangbehälter, wobei der Fliehkraftabscheider einen tangentialen Einlass, einen ersten Auslass zum Entfernen der Flüssigkeit und einen zweiten Auslass zum Entfernen der festen Partikel aufweist, dadurch gekennzeichnet, dass der Auffangbehälter mit dem Fliehkraftabscheider reversibel verbunden ist.

Erfindungsgemäß ist eine Abtrennvorrichtung zur Abtrennung fester Partikel aus einer Flüssigkeit. Bevorzugt ist der Fliehkraftabscheider ein Hydrozyklon. Bei einem Hydrozyklon dienen der erste Auslass zum Entfernen der Flüssigkeit, insbesondere des Kühlschmierstoffs und der zweite Auslass zum Entfernen der festen Partikel. Bevorzugt ist also insbesondere eine erfindungsgemäße Abtrennvorrichtung zum Abtrennen fester Partikel, insbesondere mit einer Dichte von mindestens 2 g/cm³, insbesondere Grafitpartikel und/oder Silikatpartikel, aus einer Flüssigkeit, insbesondere aus einem Kühlschmierstoff, wobei der Fliehkraftabscheider ein Hydrozyklon ist, und wobei der erste Auslass zum Entfernen der Flüssigkeit, insbesondere des Kühlschmierstoffs dient.

Der Aufbau eines Fliehkraftabscheiders und insbesondere eines Hydrozyklons ist dem Fachmann bekannt. Ein Fliehkraftabscheider besteht im Wesentlichen aus drei Teilen, nämlich dem Einlaufzylinder (oben), dem verjüngten unteren Segment oder Bereichs (unten), insbesondere Kegel oder Rohrzylinder und dem Tauchrohr (mittig von oben herab im Einlaufzylinder eingebracht). Im Einlaufzylinder wird das Gas-/Partikelgemisch beziehungsweise das Flüssigkeit-/Partikelgemisch durch tangentiales Einblasen auf eine kreisförmige Bahn gebracht. Durch die Verjüngung des anschließenden unteren Segments, beispielsweise Kegels oder Rohrzylinders nimmt die Drehgeschwindigkeit dermaßen zu, dass die Partikel durch die Fliehkraft an die Wände des Abscheiders geschleudert und soweit abgebremst werden, dass sie sich aus der Strömung lösen, um nach unten durch einen Auslass rieseln. Bei entsprechend schweren Partikeln ist der Kegel nicht unbedingt nötig. Das gereinigte Gas beziehungsweise die gereinigte Flüssigkeit verlässt den unteren Bereich durch das mittige Tauchrohr nach oben. Auch ein Hydrozyklon als Fliehkraftabscheider für Flüssiggemische weist meist ein oberes zylindrisches Segment mit einem tangentialen Zulauf und ein unteres konisches Segment mit einem unteren Auslass und ein Tauchrohr, auch Vortex-Finder oder Oberlaufdüse genannt, welches axial, von oben in das Innere des Zyklons ragt, auf.

Die Bezeichnung "oben" und "unten" gehen im Zusammenhang mit der vorliegenden Erfindung vom Oberlauf (spezifisch leichtere Fraktion) und Unterlauf (spezifisch schwere Fraktion) aus. Erfindungsgemäß bevorzugt ist der Oberlauf die aufgereinigte Flüssigkeit oder das aufgereinigte Gas, insbesondere der aufgereinigte Kühlschmierstoff, und der Unterlauf sind die abgetrennten Partikel, beispielsweise Metallpartikel und/oder Grafitpartikel. Die tatsächliche Positionierung eines Hydrozyklons ist davon jedoch weitestgehend unabhängig, so finden durchaus auch horizontal eingebaute Hydrozyklone Anwendung, die ebenfalls Bestandteil der erfindungsgemäßen Abtrennvorrichtung sein können. Das untere Segment des Hydrozyklons muss nicht zwingend konisch sein, sondern muss lediglich einen geringeren Durchmesser als das obere zylindrische Segment aufweisen, um eine Beschleunigung der Flüssigkeit zu bewirken, und kann beispielsweise als Rohrzylinder ausgebildet sein.

Bevorzugt ist die aufzureinigende Flüssigkeit ein Kühlschmierstoff, insbesondere ein Kühlschmierstoff, der als Emulsion vorliegt.

Es zeigte sich überraschenderweise, dass die Verwendung eines Hydrozyklons zur Aufreinigung von Kühlschmierstoffen, insbesondere zur Abtrennung von Grafitpartikeln, zu besonders guten Ergebnissen führt. Der Energieverbrauch Verbrauch ist dabei vergleichsweise gering. Auch bilden sich durch den Hydrozyklon bei Kühlschmierstoffen in Form von Emulsionen in vorteilhafter Weise vergleichsweise kleine Öltröpfchen. Dadurch kann bei gleicher Ölmenge mehr Wasser gebunden werden, so dass die Emulsion dünnflüssiger wird, wodurch feste Partikel, insbesondere Grafitpartikel, aber zum Beispiel auch Metalpartikel und Metallspäne, besser aus der Emulsion ausfallen können, da der Dichteunterschied größer wird und die Öltröpfchen die Partikel nicht umschließen können.

In einer bevorzugten Ausführungsform dient die erfindungsgemäße Abtrennvorrichtung zur Abtrennung fester Partikel, insbesondere mit einer Dichte von mindestens 2 g/cm³, beispielsweise Grafitpartikel und/oder Silikatpartikel, aus einem Kühlschmierstoff einer Zerspanungsmaschine.

Bevorzugt handelt es sich bei den festen Partikeln um feste Partikel mit einer Dichte von mindestens etwa 2 g/cm³. Bevorzugt handelt es sich bei den festen Partikeln um feste Partikel mit einer Dichte von mindestens 2 g/cm³. Bevorzugt handelt es sich bei den festen Partikeln um feste Partikel mit einer Dichte von mindestens etwa 2,0 g/cm³.

Bevorzugt handelt es sich bei den festen Partikeln um feste Partikel mit einer Dichte von höchstens etwa 12 g/cm³. Bevorzugt handelt es sich bei den festen Partikeln um feste Partikel mit einer Dichte von höchstens 12 g/cm³. Bevorzugt handelt es sich bei den festen Partikeln um feste Partikel mit einer Dichte von höchstens 9 g/cm³. Bevorzugt handelt es sich bei den festen Partikeln um feste Partikel mit einer Dichte von höchstens 8 g/cm³. Bevorzugt handelt es sich bei den festen Partikeln um feste Partikel mit einer Dichte von höchstens 7,5 g/cm³. Bevorzugt handelt es sich bei den festen Partikeln um feste Partikel mit einer Dichte von höchstens 5,5 g/cm³. Bevorzugt handelt es sich bei den festen Partikeln um feste Partikel mit einer Dichte von höchstens 4 g/cm³.

Es zeigte sich überraschender Weise, dass mit der erfindungsgemäßen Vorrichtung feste Partikel unterschiedlichster Dichte abgetrennt werden können, zum Beispiel Grafitpartikel mit einer Dichte von etwa 2,2 g/cm³ bis hin zu Bleipartikeln mit einer Dichte von etwa 11,3 g/cm³ oder Partikeln mit noch größerer Dichte. Insbesondere können auch feste Partikel mit einer sehr geringen Dichte abgetrennt werden, beispielsweise Grafitpartikel und/oder Silikatpartikel.

Bevorzugt handelt es sich bei den festen Partikeln um Grafitpartikel, Silikatpartikel, Metalpartikel und/oder Metallspäne.

Bevorzugt handelt es sich bei den festen Partikeln um Grafitpartikel, Metallpartikel und/oder Metallspäne.

Bevorzugt handelt es sich bei den festen Partikeln um Grafitpartikel, Silikatpartikel, Bleipartikel und/oder Mischungen davon.

Bevorzugt handelt es sich bei den festen Partikeln um Grafitpartikel und/oder Silikatpartikel.

Bevorzugt handelt es sich bei den festen Partikeln um Grafitpartikel und Silikatpartikel.

Bevorzugt handelt es sich bei den festen Partikeln um Silikatpartikel.

Bevorzugt handelt es sich bei den festen Partikeln um Grafitpartikel.

Erfindungsgemäß ist der Fliehkraftabscheider, insbesondere Hydrozyklon, senkrecht positioniert, so dass der zweite Auslass zum Entfernen der festen Partikel am unteren Ende des Fliehkraftabscheiders, insbesondere Hydrozyklons liegt, und wobei ein unterer Abschnitt des Fliehkraftabscheiders, insbesondere Hydrozyklons in den Auffangbehälter hineinragt. Dies ermöglicht einen einfachen Aufbau und ein direktes Hineinfallen der festen Partikel in den Auffangbehälter.

Erfindungsgemäß weist der zweite Auslass zum Entfernen der festen Partikel eine Prallplatte auf. Prallplatten am zweiten Auslass eines Fliehkraftabscheiders sind dem Fachmann bekannt. Am Ende des unteren Segments des Fliehkraftabscheiders kann sich bevorzugt im Spaltabstand von wenigen Millimetern eine Prallplatte befinden. An der Prallplatte kann der Flüssigkeitsstrom 180° nach oben und entgegen der Schwerkraft umgelenkt werden, so dass die Flüssigkeit durch das Tauchrohr die Flüssigkeit den Fliehkraftabscheider verlässt. Die festen Partikel werden dabei aus dem Spalt zwischen unterem Segment und Prallplatte in den darunter angeordneten und mit Flüssigkeit gefüllten Behälter geschleudert. Dabei entsteht bevorzugt ein Volumenaustausch durch die Fliehkraftauslassströmung mit einer vorgelagerten Flüssigkeit und dem Partikel, da dieser in seiner Dichte die Flüssigkeit verdrängt. Bevorzugt ist diese vorgelagerte Flüssigkeit der Kühlschmierstoff oder eine Komponente des Kühlschmierstoffs.

Die Prallplatte ist bevorzugt mittels eines Haltelements in Form eines Bügels, insbesondere U-förmiger Bügels im Spaltabstand zum unteren Segment des Fliehkraftabscheiders positioniert. Dabei ist der bevorzugte Außendurchmesser der Prallplatte gleich dem Außendurchmesser des unteren Segments. In einer vorteilhaften Ausführung des Haltebügels, insbesondere U-förmigen Bügels ist dieser in der Oberkante der Innenseite bündig mit dem Innenbereich zum unteren Segment angeschweißt, so dass ausgeschleuste feste Partikel aus dem Spalt ohne Hindernis und Widerstand austreten können. In der vorteilhaften Ausführung des Bügels wird dieser horizontal von der Prallplatte weggeführt und erst nach wenigen cm in einer 90° Umlenkung senkrecht nach oben geführt. Der Abstand zwischen der Prallplatte und dem senkrecht fortverlaufenden Bügel, insbesondere U-förmigen Bügel hat den Vorteil, dass es zu keiner Spalt-Austrittsreduktion und zum erhöhten Widerstand beim Partikelfluss kommt und dass sich die Rotationsströmung im Spalt nicht abgebremst wird.

Die bevorzugte Anzahl der Bügel, insbesondere U-förmigen Bügel ist drei Stück, die umlaufend im Abstand von 120° um das untere Segment und im Umlauf der Prallplatte positioniert sind, da somit der Spaltabstand gleichmäßig gehalten werden kann und mit nur drei U-förmigen Bügel der Strömungsaustritt am wenigsten beeinflusst wird. In der Abstimmung der Prallplatten-Dicke von beispielsweise 6 mm wird dann auch der Bügel-Durchmesser von 6 mm als Rundmaterial ausgeformt. In einer vorteilhaften Ausführung des Bügels ist dieser aus einem rundmaterial, beispielsweise Stab oder Rohr, das zwei Krümmungen aufweist, wodurch sich die Bügelform, insbesondere U-förmige Bügelform, ergibt. Bevorzugt ist ein Bügel mit Krümmungen von 2x 90°. Besonders bevorzugt haben die Krümmungen einen Radius, der 2,5 bis 3,5 mal so groß, besonders bevorzugt etwa dreimal so groß ist wie der Durchmesser des Bügelkörpers. Dadurch können sich besonders schlecht Ablagerungen anlagern und den Spalt blockieren.

Die abgetrennten festen Partikel, insbesondere mit einer Dichte von mindestens 2 g/cm³, beispielsweise Grafitpartikel und/oder Silikatpartikel, werden erfindungsgemäß in dem Auffangbehälter gesammelt, der mit dem Fliehkraftabscheider reversibel verbunden ist. Durch die reversible Verbindung kann der Auffangbehälter leicht zum Entleeren entfernt oder ausgetauscht werden.

Dabei kann in vorteilhafter Weise auf einen Filter verzichtet werden, der die Partikel sammelt und nach einer gewissen Zeit gereinigt oder ausgetauscht werden muss. Das Auswechseln oder Reinigen des erfindungsgemäßen Auffangbehälters, in dem sich die Partikel sammeln und ablagern ist einfacher, sauberer und schneller als das Auswechseln oder Reinigen eines Filters. Dies ist insbesondere vorteilhaft wenn die festen Partikel klebrig sind, wie zum Beispiel aus einem Kühlschmierstoff abgetrennte Grafitpartikel.

Bevorzugt ist daher zwischen dem Fliehkraftabscheider und dem Auffangbehälter kein Filter zwischengeschaltet.

Erfindungsgemäß weist der Auffangbehälter einen ersten, äußeren druckstabilen Behälter und in diesem einen zweiten, flexiblen Behälter auf.

Die vorliegende Erfindung betrifft dabei insbesondere eine erfindungsgemäße Abtrennvorrichtung zur Abtrennung fester Partikel, insbesondere mit einer Dichte von mindestens 2 g/cm³, beispielsweise Grafitpartikel und/oder Silikatpartikel, aus einem Kühlschmierstoff (KSS), wobei der Fliehkraftabscheider ein Hydrozyklon ist, wobei der erste Auslass zum Entfernen des Kühlschmierstoffs dient und wobei der Auffangbehälter einen ersten, äußeren druckstabilen Behälter und in diesem einen zweiten, flexiblen Behälter aufweist. Beide Behälter sind bevorzugt reversibel ausgestaltet, das heißt sie sind am Fliehkraftabscheider reversibel befestigt und lassen sich darüber hinaus auch voneinander trennen, insbesondere der innere Behälter aus dem äußeren Behälter entfernen, zum Beispiel herausziehen, wenn der äußere Behälter vom Fliehkraftabscheider getrennt ist.

Durch diese bevorzugte Ausführungsform wird die Abtrennvorrichtung aus zwei gekoppelten Modulen gefertigt, so dass das bewährte Fliehkraftprinzip eines Hydrozyklons zum Einsatz kommt, die abgeschiedenen Partikel dann aber in einem druckfesten äußeren mit einem flexiblen inneren Behälter, beispielsweise Beutel, als Sammler eingeleitet und eingelagert werden.

Bevorzugt ist der erste, äußere und druckstabile Behälter aus Edelstahl, insbesondere aus nichtmagnetischem Edelstahl.

Bevorzugt ist der zweite flexible Behälter ein Beutel, insbesondere ein Kunststoffbeutel, beispielsweise aus Polypropylen oder Polyethylen, insbesondere ein Polyethylen mit hoher Dichte (HDPE). Alternativ kann der zweite flexible Behälter auch aus verstärktem Glasfasermaterial bestehen oder dieses enthalten. Dem Fachmann sind geeignete Materialien für solche Behälter, insbesondere Beutel bekannt. Der flexible Innenbehälter kann mit Trag- oder Hebelaschen ausgerüstet sein. Der Austausch eines solchen Beutels ist preisgünstiger als der Austausch eines Filters. Darüber hinaus lässt sich ein Beutel einfach und sicher verschließen, so dass die festen Partikel nicht heraustreten können.

Der erfindungsgemäße zweiteilige Aufbau des Auffangbehälters mit außenliegenden druckdichten Behältern und innenliegenden flexiblen Behältern hat den Vorteil, dass der flexible innere Behälter mit den aufgefangenen Feststoffpartikeln leicht entfernt und verschlossen werden kann, sodass die abgetrennten Feststoffpartikel, beispielsweise Grafit- und Metallpartikel in den flexiblen Behälter, der kostengünstig als Einweg- oder Mehrwegbehälter ausgestaltet sein kann, abtransportiert werden können. Der äußere druckfeste Behälter, der beispielsweise aus Metall gefertigt sein kann, umgibt den inneren Behälter, beispielsweise Beutel, und schützt ihn vor Beschädigungen. Weiterhin hat der äußere druckfeste Behälter den Vorteil, dass dieser den durch das Einpumpen der Flüssigkeit oder des Gases in den Hydrozyklon entstehende Staudruck, der bis zu 2 bar betragen kann, aushält und somit der innere Auffangbehälter einfacher ausgeführt sein kann. Beispielsweise kann der äußere Behälter als dauerhaftes Bestandteil der Anlage ausgeführt sein, während der innere Behälter ein Einwegbehälter, z.B. Einwegbeutel sein kann, so dass eine Reinigung entfällt und die abgetrennten Festpartikel direkt mit dem inneren Behälter schmutzfrei entsorgt werden können.

Erfindungsgemäß weist der zweite, flexible Behälter eine Öffnung auf und ist an dem unteren Abschnitt des Fliehkraftabscheiders, insbesondere Hydrozyklons befestigt, wobei der untere Abschnitt zumindest teilweise durch die Öffnung des zweiten, flexiblen Behälters in diesen hineinragt, wobei der zweite, flexible Behälter und der untere Abschnitt des Fliehkraftabscheiders dicht und reversibel miteinander verbunden sind.

Bevorzugt umfasst der äußere Behälter zwei Teile, nämlich den Behälter mit einer Öffnung, insbesondere oberen Öffnung und einen Deckel, der die Öffnung des Behälters reversibel verschließt. Das untere Segment des Fliehkraftabscheiders ist bevorzugt mit dem Behälterdeckel fest verbunden, zum Beispiel verschweißt. Bevorzugt ist das untere Segment des Fliehkraftabscheiders in den Deckel des äußeren darunter angeordneten Druckbehälters in der Achse von den beiden Zylindern im Zentrum fest verbunden.

Bevorzugt wird die Deckelöffnung im Durchmesser der inneren lichten Weite des druckfesten Behälters ausgeführt. Dadurch wird sichergestellt, dass der mit Partikel gefüllte flexible Innenbehälter ohne Wandwiderstand aus dem druckfesten Außenbehälter entnommen werden kann. Die Befestigung des Deckels kann beispielsweise mit Spanndeckel oder mit Bügelschrauben, die beim Öffnen mittels Scharniere auf die Seite geklappt werden, ausgeführt sein.

In einer vorteilhaften Ausführung der Abtrennvorrichtung ragt das untere Segment des Fliehkraftabscheiders in den äußeren Behälter hinein. Dadurch kann der flexible Innenbehälter in der Ausführung als Beutel, welcher oben offen ist, um das untere Segment gelegt werden. Da der flexible Innenbehälter möglichst eine Größe hat, dass er an der Wandung des äußeren Behälters anliegt, muss der Folienbeutel dann zusammengerafft werden, um sich an das untere Segment anlegen zu können.

In einer daraus resultierenden vorteilhaften Ausführung der Erfindung kann der innere flexible Behälter als Raffung an das untere Segment des Fliehkraftabscheiders mit einem Halteelement, beispielsweise Kabelbinder, fixiert und angepresst werden, so dass eine Abdichtung zwischen dem gerafften flexiblen Innenbehälter und dem unteren Segment entsteht. Bevorzugt wird der innere flexible Behälter mit einem Kabelbinder befestigt. Dies hat den Vorteil, das Kabelbinder preiswert sind und ihre Verwendung einfach ist. Die Kabelbinder können nach Gebrauch als Einwegmaterial mit dem gefüllten inneren flexiblen Behälter entsorgt werden.

In einer weiteren vorteilhaften Ausführung der Erfindung befindet sich somit die Prallplatte, die unterhalb des unteren Segments des Fliehkraftabscheiders angeordnet ist, auch im druckfesten Pufferbehälter. In einer weiteren vorteilhaften Ausführung ist die Prallplatte an dem unteren Segment über ein Befestigungselement, insbesondere über eine Bügelbefestigung am unteren Segment des Fliehkraftabscheiders befestigt. Besonders bevorzugt wird das Haltelement zum Fixieren und Anpressen des flexiblen Behälters am unteren Segment direkt oberhalb dieses Befestigungselement, insbesondere der Bügel, um das untere Segment befestigt. Dadurch verhindert das Befestigungselement das Abrutschen des Haltelements und des flexiblen Behälters nach unten.

In einer bevorzugten Ausführungsform weist der Auffangbehälter, insbesondere der erste, äußeren druckstabile Behälter eine Belüftungs-Entleerungsöffnung auf. Diese kann zum Beispiel ein Ventil oder Kugelhahn sein.

Diese Öffnung, insbesondere als Ventil, hat den Vorteil, dass der Zwischenraum zwischen der Wand des druckfesten äußeren Behälters und des inneren flexiblen Behälters belüftet werden kann, sodass Luft aus dem äußeren Behälter nach außen entweichen kann, wenn der innere Behälter gefüllt wird und sich dadurch ausdehnt. Dadurch kann sich der flexible Innenbehälter an die Innenwand des druckfesten Außenbehälters anlehnen, so dass der größtmögliche Pufferraum entsteht.

Dabei ist ein zusätzlicher Vorteil der bevorzugten Ausführung der Abtrennvorrichtung, dass das untere Segment mit der Prallplatte in den druckfesten Außenbehälter hineinragt und dass der lichte Abstand zwischen dem druckfesten Außenbehälter-Deckel und dem Spalt zwischen dem kleinen unteren Segment und der Prallplatte mehrere cm auseinander liegt. Dadurch verbleibt ein Gasraum zwischen dem Deckel und dem Spaltbereich das durch den Betriebs-Überdruck als Gaspolster funktioniert. Da sich sowohl der Gasraum zwischen dem druckfesten Außenbehälter und dem inneren flexiblen Behälter nicht komplett von Gasen entlüften lässt, ist sichergestellt, dass beim Öffnen des Behälterdeckels keine Flüssigkeit über den Rand des druckfesten Außenbehälters ausläuft und dass sich der mit festen Partikeln gefüllte flexible Innenbehälter ohne Überschwappen der Flüssigkeit entnehmen lässt.

In einer bevorzugten Ausführungsform ist der Auffangbehälter mit einer Wägeeinrichtung, beispielsweise einer Waage versehen. Bevorzugt kann der Auffangbehälter auf einer Bodenwaage stehen, die es ermöglicht, die Beladung mit den festen Partikeln zu überwachen, um den optimalen Zeitpunkt der Vollfüllung zu erkennen, um den inneren flexiblen Behälter auszutauschen oder zu entleeren. Um dabei sicherzustellen, dass keine Verspannungen die Gewichtszunahme beeinträchtigen, können die Zuleitung und Ableitung des Hydrozyklonen mittels Schlauch oder Kompensator flexibel angeschlossen werden. In dieser vorteilhaften Ergänzung durch eine Waage kann das zeitliche Einlagern von Partikel-Masse online dokumentiert werden, um so bei einer Vollfüllung und damit keine Gewichtszunahme mehr den Inhalt des flexiblen Innenbehälters zu entleeren. Da die Dichte der festen Partikel sowie der vorgelegten Flüssigkeit, die durch die festen Partikel aus dem Behälter gedrängt wird, zumindest annähernd bekannt ist, kann die Befüllungsmenge durch die festen Partikel leicht errechnet werden.

Bevorzugt ist in dem inneren, flexiblen Behälter vor Inbetriebnahme der Abtrennvorrichtung eine Flüssigkeit vorgelagert, der innere Behälter also mit einer Flüssigkeit gefüllt. Bevorzugt ist diese vorgelagerte Flüssigkeit der Kühlschmierstoff oder eine Komponente des Kühlschmierstoffs. Beim Betrieb der Abtrennvorrichtung entsteht dann ein Volumenaustausch im Inneren Behälter, da die Flüssigkeit durch feste Partikel, die schwerer sind, verdrängt und ersetzt wird. Dabei ergibt sich insbesondere bei der Bearbeitung von grafithaltigen Produkten wie z.B. Grauguss, Sphäroguss, Temperguss oder Grafit in fester Form, ein weiterer Vorteil, da dabei so feine Abriebe entstehen, dass diese sich bei der Einlagerung in dem Innenbehälter selbst verdichten, so dass die Flüssigkeit im Verlaufe der Festpartikelfüllung aus den Zwischenräumen nach oben gepresst wird, und dass bei der Entleerung oder Entnahme des Innenbehälters fast ausschließlich Feststoffe entnommen werden, so dass kaum Kühlschmierstoff aus dem System entfernt wird.

Die vorliegende Erfindung betrifft auch die Verwendung einer erfindungsgemäßen Abtrennvorrichtung zur Abtrennung fester Partikel aus einem Kühlschmierstoff, insbesondere von Grafitpartikeln, bevorzugt aus einem Kühlschmierstoff einer Zerspanungsmaschine.

In einer bevorzugten Ausführungsform ist die Verwendung fester Partikel, insbesondere mit einer Dichte von mindestens 2 g/cm³, beispielsweise Grafitpartikel und/oder Silikatpartikel, aus einem Kühlschmierstoff, bevorzugt einer Zerspanungsmaschine.

Bevorzugt handelt es sich bei den festen Partikeln um feste Partikel mit einer Dichte von mindestens etwa 2 g/cm³. Bevorzugt handelt es sich bei den festen Partikeln um feste Partikel mit einer Dichte von mindestens 2 g/cm³. Bevorzugt handelt es sich bei den festen Partikeln um feste Partikel mit einer Dichte von mindestens etwa 2,0 g/cm³.

Bevorzugt handelt es sich bei den festen Partikeln um feste Partikel mit einer Dichte von höchstens etwa 12 g/cm³. Bevorzugt handelt es sich bei den festen Partikeln um feste Partikel mit einer Dichte von höchstens 12 g/cm³. Bevorzugt handelt es sich bei den festen Partikeln um feste Partikel mit einer Dichte von höchstens 9 g/cm³. Bevorzugt handelt es sich bei den festen Partikeln um feste Partikel mit einer Dichte von höchstens 8 g/cm³. Bevorzugt handelt es sich bei den festen Partikeln um feste Partikel mit einer Dichte von höchstens 7,5 g/cm³. Bevorzugt handelt es sich bei den festen Partikeln um feste Partikel mit einer Dichte von höchstens 5,5 g/cm³. Bevorzugt handelt es sich bei den festen Partikeln um feste Partikel mit einer Dichte von höchstens 4 g/cm³.

Bevorzugt handelt es sich bei den festen Partikeln um Grafitpartikel, Silikatpartikel, Metalpartikel und/oder Metallspäne.

Bevorzugt handelt es sich bei den festen Partikeln um Grafitpartikel, Metallpartikel und/oder Metallspäne.

Bevorzugt handelt es sich bei den festen Partikeln um Grafitpartikel, Silikatpartikel, Bleipartikel und/oder Mischungen davon.

Bevorzugt handelt es sich bei den festen Partikeln um Grafitpartikel und/oder Silikatpartikel.

Bevorzugt handelt es sich bei den festen Partikeln um Grafitpartikel und Silikatpartikel.

Bevorzugt handelt es sich bei den festen Partikeln um Silikatpartikel.

Bevorzugt handelt es sich bei den festen Partikeln um Grafitpartikel.

Weitere bevorzugte Ausführungsformen der erfindungsgemäßen Verwendung ergeben sich aus der Beschreibung für die erfindungsgemäße Abtrennvorrichtung.

Die vorliegende Erfindung betrifft auch eine Werkzeugmaschine, umfassend eine erfindungsgemäße Abtrennvorrichtung. Bevorzugt ist die Werkzeugmaschine eine Zerspanungsmaschine. Bevorzugt weist die Werkzeugmaschine eine Lagerwanne auf. Bevorzugt ist die erfindungsgemäße Abtrennvorrichtung an der Lagerwanne angeschlossen. Bevorzugt hat also die Lagerwanne einen Zulauf und einen Ablauf zur Abtrennvorrichtung.

Bevorzugt ist zwischen Werkzeugmaschine und Lagerwanne ein Vorfilter zwischengeschaltet.

Die vorliegende Erfindung betrifft auch ein Verfahren zum Abtrennen fester Partikel aus einer Flüssigkeit, aufweisend folgende Schritte:
a) Einleiten einer feste Partikel haltigen Flüssigkeit, über den einen tangentialen Einlass in den Fliehkraftabscheider einer erfindungsgemäßen Abtrennvorrichtung,
b) Abtrennen der festen Partikel durch Ausleiten der festen Partikel durch den zweiten Auslass aus dem Fliehkraftabscheider in den Auffangbehälter,
c) und Ausleiten der Flüssigkeit durch den ersten Auslass aus dem Fliehkraftabscheider.

Die vorliegende Erfindung betrifft auch Verfahren zum Abtrennen fester Partikel, insbesondere Grafitpartikel, aus einem Kühlschmierstoff, aufweisend folgende Schritte:
a) Einleiten eines feste Partikel haltigen Kühlschmierstoffs, über den einen tangentialen Einlass in den Fliehkraftabscheider einer erfindungsgemäßen Abtrennvorrichtung,
b) Abtrennen der festen Partikel durch Ausleiten der festen Partikel durch den zweiten Auslass aus dem Fliehkraftabscheider in den Auffangbehälter,
c) und Ausleiten des Kühlschmierstoffs durch den ersten Auslass aus dem Fliehkraftabscheider.

Bevorzugt wird bei den Verfahren vor Schritt a) der Auffangbehälter mit einer Flüssigkeit, insbesondere einem Kühlschmierstoff oder einer Komponente eines Kühlschmierstoffs vorgefüllt.

Bevorzugt handelt es sich bei den festen Partikeln um feste Partikel mit einer Dichte von mindestens etwa 2 g/cm³. Bevorzugt handelt es sich bei den festen Partikeln um feste Partikel mit einer Dichte von mindestens 2 g/cm³. Bevorzugt handelt es sich bei den festen Partikeln um feste Partikel mit einer Dichte von mindestens etwa 2,0 g/cm³.

Bevorzugt handelt es sich bei den festen Partikeln um feste Partikel mit einer Dichte von höchstens etwa 12 g/cm³. Bevorzugt handelt es sich bei den festen Partikeln um feste Partikel mit einer Dichte von höchstens 12 g/cm³. Bevorzugt handelt es sich bei den festen Partikeln um feste Partikel mit einer Dichte von höchstens 9 g/cm³. Bevorzugt handelt es sich bei den festen Partikeln um feste Partikel mit einer Dichte von höchstens 8 g/cm³. Bevorzugt handelt es sich bei den festen Partikeln um feste Partikel mit einer Dichte von höchstens 7,5 g/cm³. Bevorzugt handelt es sich bei den festen Partikeln um feste Partikel mit einer Dichte von höchstens 5,5 g/cm³. Bevorzugt handelt es sich bei den festen Partikeln um feste Partikel mit einer Dichte von höchstens 4 g/cm³.

Bevorzugt handelt es sich bei den festen Partikeln um Grafitpartikel, Silikatpartikel, Metalpartikel und/oder Metallspäne.

Bevorzugt handelt es sich bei den festen Partikeln um Grafitpartikel, Metallpartikel und/oder Metallspäne.

Bevorzugt handelt es sich bei den festen Partikeln um Grafitpartikel, Silikatpartikel, Bleipartikel und/oder Mischungen davon.

Bevorzugt handelt es sich bei den festen Partikeln um Grafitpartikel und/oder Silikatpartikel.

Bevorzugt handelt es sich bei den festen Partikeln um Grafitpartikel und Silikatpartikel.

Bevorzugt handelt es sich bei den festen Partikeln um Silikatpartikel.

Bevorzugt handelt es sich bei den festen Partikeln um Grafitpartikel.

Die erfindungsgemäßen Verfahren werden bevorzugt mit einer erfindungsgemäßen Abtrennvorrichtung oder einer erfindungsgemäßen Filteranlage durchgeführt. Somit gelten alle bevorzugten Ausführungsformen der Abtrennvorrichtung und der erfindungsgemäßen Filteranlage auch für die erfindungsgemäßen Verfahren. Bevorzugt werden die erfindungsgemäßen Verfahren bei einer erfindungsgemäßen Werkzeugmaschine durchgeführt.

Weitere bevorzugte Ausführungsformen ergeben sich aus den Unteransprüchen.

Die vorliegende Erfindung wird anhand der folgenden Beispiele und Figuren näher erläutert, wobei diese nicht einschränkend zu verstehen sind.

Es zeigen:
- Figur 1:: Einen Querschnitt einer erfindungsgemäßen Abtrennvorrichtung ;
- Figur 2:: Eine Draufsicht der erfindungsgemäßen Abtrennvorrichtung aus Figur 1;
- Figur 3:: Einen Querschnitt einer bevorzugten Ausführungsform der erfindungsgemäßen Abtrennvorrichtung;
- Figur 4:: Einen Querschnitt des flexiblen Innenbehälters;
- Figur 5:: Einer erfindungsgemäßen Abtrennvorrichtung mit aufgeschnittenem äußerem Behälter;
- Figur 6:: Eine erfindungsgemäße Zerspanungsmaschine.

### Bezugszeichenliste:

- 10: Fliehkraftabscheider, insbesondere Hydrozyklon
- 11: erster Auslass
- 12: zweiter Auslass
- 13: tangentialer Einlass
- 14: Prallplatte
- 15: Haltebügel
- 16: unterer Abschnitt des Fliehkraftabscheiders , insbesondere Hydrozyklons
- 17: verjüngtes, unteres Segment
- 18: Einlaufzylinder
- 19: Tauchrohr
- 50: Auffangbehälter
- 51: erster, äußerer und druckstabiler Behälter
- 52: zweiter, innerer und flexibler Behälter
- 53: Wägeeinrichtung
- 54: Belüftungs- und Entleerungsventil
- 55: Deckel
- 56: Deckel-Spannelement
- 57: Kabelbinder
- 71: Flüssigkeit oder Gas, insbesondere Kühlschmierstoff
- 72: feste Partikel, insbesondere Grafitpartikel
- 73: Vorgelegter Kühlschmierstoff
- 100: Abtrennvorrichtung
- 300: Werkzeugmaschine, insbesondere Zerspanungsmaschine
- 350: Lagerwanne
- 351: Vorfilter

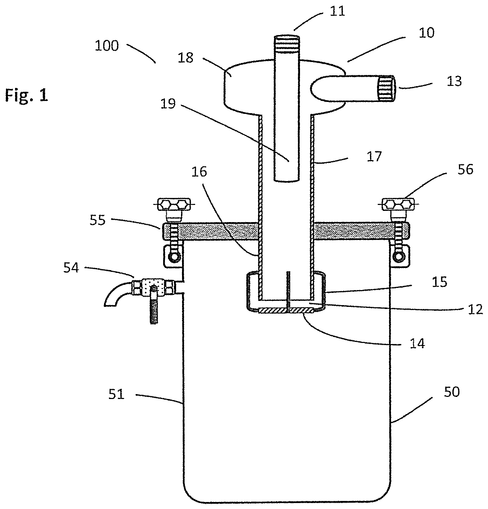

Figur 1 zeigt einen Querschnitt einer erfindungsgemäßen Abtrennvorrichtung (100). Die Abtrennvorrichtung (100) weist einen Hydrozyklon (10) und einen Auffangbehälter (50) auf. Der Hydrozyklon hat die üblichen Abschnitte Einlaufzylinder (18), Tauchrohr (19) und verjüngtes, unteres Segment (17), das selbst einen unteren Abschnitt (16) aufweist. Der Hydrozyklon (10) hat einen tangetialen Einlass (13), einen ersten Auslass (11) für die Flüssigkeit und einen zweiten Auslass (12) für die Festpartikel. Der erste Auslass (11) befindet sich am oberen Ende eines Tauchrohrs (19), der zweite Auslass (12) am unteren Ende des unteren Abschnitts (16) des Hydrozyklons. Unter dem zweiten Auslass (12) befindet sich eine Prallplatte (14), die mit drei Haltebügeln (15) am unteren Abschnitt (16) des unteren Segments (17) befestigt ist.

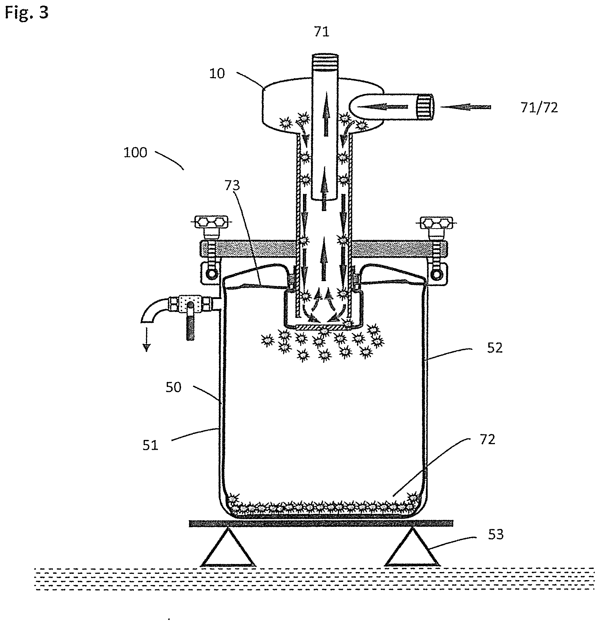

Der untere Abschnitt (16) mit dem zweiten Auslass (12) und der Prallplatte (14) reicht in den Auffangbehälter (50) hinein, der hier als druckstabiler Behälter (51) ausgestaltet ist. Der Deckel (55) des Behälters (50) ist fest mit dem verjüngten, unteren Segment (17) des Hydrozyklons (10) verbunden und lässt sich über Deckel-Spannelemente (56) dicht und reversibel mit dem Behälter (50) verbinden, beispielsweise um einen in den Figuren 3 bis 5 gezeigten zweiten, flexiblen, inneren Behälter, insbesondere Beutel einzuführen oder zu entfernen. Weiterhin weist der Behälter (50) ein Belüftungs- und Entleerungsventil (54) auf.

Mit Festpartikeln, insbesondere mit einer Dichte von mindestens 2 g/cm³, beispielsweise Grafitpartikeln verunreinigter Kühlschmierstoff wird durch den tangentialen Einlass (13) in den Hydrozyklon (10) hineingepumpt und im Einlaufzylinder (18) verwirbelt. Durch die Verjüngung im unteren Segment (17) findet eine Beschleunigung statt und die Festpartikel werden von der Flüssigkeit getrennt. Die so aufgereinigte Flüssigkeit kann durch das Tauchrohr (19) aus dem ersten Auslass (11) entweichen während die Festpartikel nach unten durch den zweiten Auslass (12) in den Behälter (50) fallen, wo sie gelagert und nach Befüllung des Behälters (50) durch die reversible Verbindung mit dem Deckel (55) entsorgt werden können.

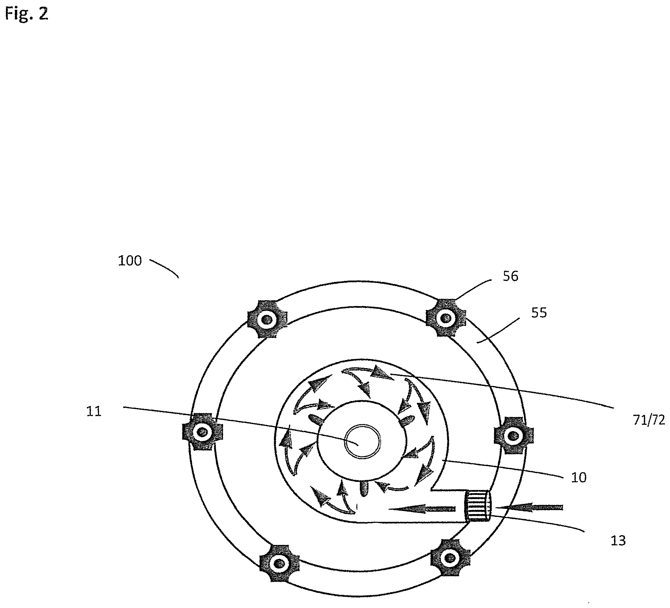

Figur 2 zeigt die erfindungsgemäße Abtrennvorrichtung (100) aus Figur 1 von oben. Zu sehen ist der Hydrozyklon (10) mit dem tangentialen Einlass (13) und dem ersten Auslass (11). Darunter befindet sich der Behälterdeckel (55), der über die Deckel-Spannelemente (56) mit dem von oben nicht sichtbaren Behälter verbunden ist. Ein Gemisch aus flüssigem Kühlschmierstoff (71) und festen Partikeln (72) wird durch den tangentialen Einlass (13) in den Hydrozyklon (10) hineingepumpt und wird dort wie durch die Pfeile angedeutet in eine Kreisbahn gezwungen.

Figur 3 zeigt eine bevorzugte Ausführungsform der Abtrennvorrichtung (100) im Betrieb. Gezeigt sind wieder der Hydrozyklon (10) und der Behälter (50). Der Behälter (50) umfasst hier den ersten, äußeren und druckstabilen Behälter (51), wie er schon in Figur 1 beschrieben wurde, und den zweiten, inneren und flexiblen Behälter (52), der hier als Beutel ausgestaltet ist und reversibel am unteren Ende des Hydrozyklons (10) befestigt ist. Der innere Beutel (52) ist mit Kühlschmierstoff (73) vorgefüllt. Auch hier wird wieder ein Gemisch aus flüssigem Kühlschmierstoff (71) und festen Partikeln (72), insbesondere Grafitpartikeln, in den Hydrozyklon hineingepumpt und aufgetrennt. Die festen Partikel (72) werden nach unten in den inneren Behälter (52) ausgeschieden und sinken dort auf den Boden, da sie eine höhere Dichte haben als der vorgelagerte Kühlschmierstoff (73). Dieser wird dadurch nach oben in den Hydrozyklon gedrückt und vermischt sich dort mit dem eingepumpten Kühlschmierstoff (72) und wird mit diesem nach oben aus der Abtrennvorrichtung transportiert.

Der Behälter (50) steht auf einer Wägeeinrichtung (53), durch die die Füllmenge an festen Partikeln (72) bestimmt werden kann, so dass die Abtrennvorrichtung (100) rechtzeitig gestoppt werden kann um den vollen Beutel (52) zu leeren oder auszutauschen.

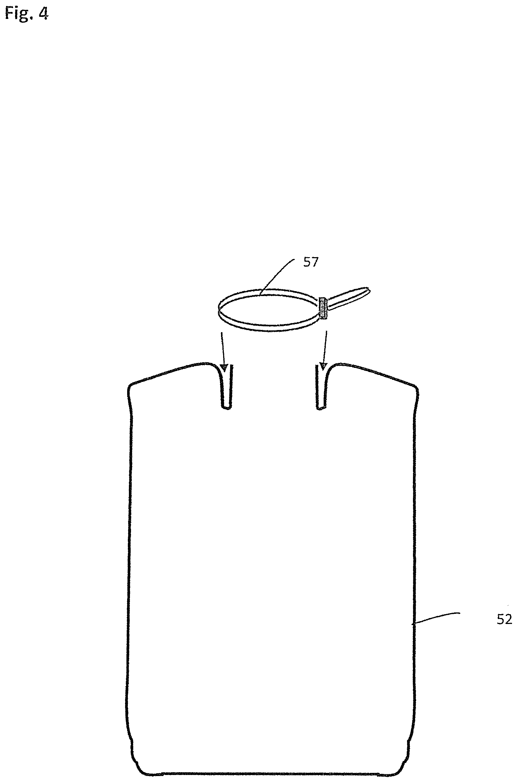

Figur 4 zeigt den zweiten, inneren und flexiblen Behälter (52) wieder in Form eines Beutels. Der flexiblen Behälter (52) kann auf einfache und preiswerte Weise mit einem herkömmlichen Kabelbinder (57) am unteren Ende des Hydrozyklons gerafft und befestigt werden.

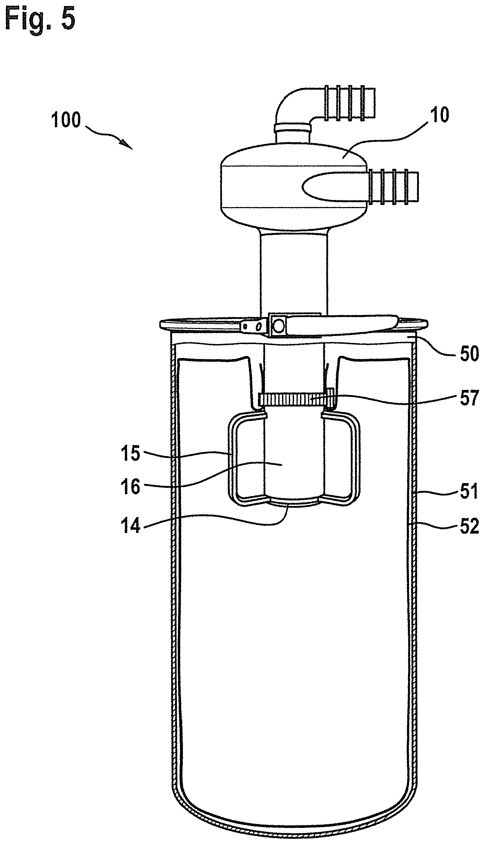

Figur 5 zeigt die bevorzugte Ausführungsform der Abtrennvorrichtung (100) mit Hydrozyklon (10) und der Behälter (50). Der äußere Behälter (51) ist aufgeschnitten, so dass man ins Innere des Behälters (50) sehen kann. Der als Beutel ausgestaltete innere Behälter (51) ist mit einem Kabelbinder (57) gerafft und am unteren Abschnitt (16) des Hydrozyklons (10) befestigt. Dabei dienen die Bügel (15) nicht nur als Halter für die Prallplatte (14) sondern verhindern auch in vorteilhafter Weise ein Herunterrutschen des Kabelbinders (57). Beim Leeren des Behälters (50) kann der Kabelbinder (57) einfach aufgeschnitten und der Beutel (52) entfernt werden.

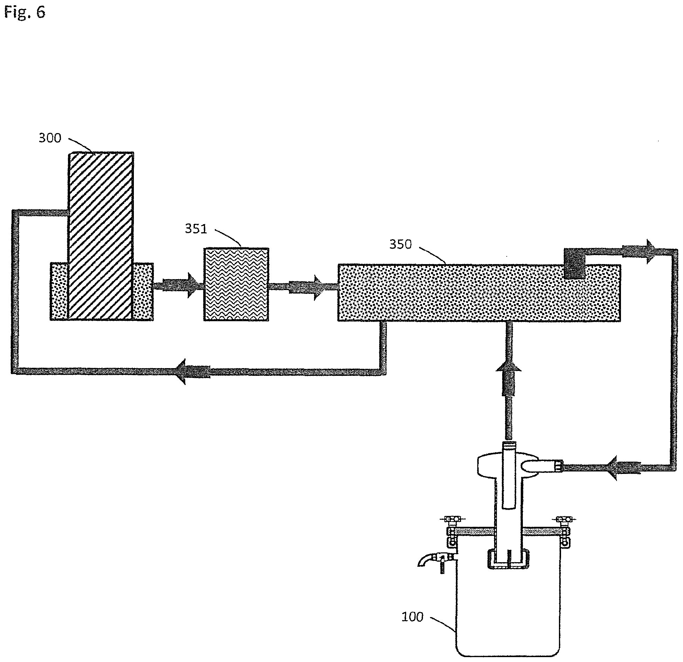

Figur 6 zeigt eine erfindungsgemäße Zerspanungsmaschine (300) in einer bevorzugten Ausführungsform mit einem Vorfilter (351), einer Lagerwanne (350) und einer erfindungsgemäßen Abtrennvorrichtung (100). Verbrauchter und mit Festpartikeln verunreinigter Kühlschmierstoff wird von der Auffangwanne der Zerspanungsmaschine (300) zum Vorfilter (351) gepumpt, dort vorgereinigt und dann in die Lagerwanne (350) gepumpt. Dort wird der Kühlschmierstoff gelagert um bei Bedarf wieder zur Zerspanungsmaschine (300) gepumpt zu werden. Der Kühlschmierstoff in der Lagerwanne (350) wird während der Lagerung in die Abtrennvorrichtung (100) gepumpt, dort von Festpartikeln aufgereinigt und wieder zurück in die Lagerwanne (350) gepumpt. Somit werden die Festpartikel in dem Kühlschmierstoff der Lagerwane (350) abgereichert, so dass der Kühlschmierstoff ohne die abgetrennten Festpartikel zurück zur Zerspanungsmaschine (300) gepumpt und dort wiederverwendet wird.

## Patentansprüche

1. Abtrennvorrichtung (100) zur Abtrennung fester Partikel (72) aus einer Flüssigkeit (71), umfassend einen Fliehkraftabscheider (10) und einen Auffangbehälter (50), wobei der Fliehkraftabscheider (10) einen tangentialen Einlass (13), einen ersten Auslass (11) zum Entfernen der Flüssigkeit (71) und einen zweiten Auslass (12) zum Entfernen der festen Partikel (72) aufweist, **dadurch gekennzeichnet, dass** der Auffangbehälter (50) mit dem Fliehkraftabscheider (10) reversibel verbunden ist, wobei der Auffangbehälter (50) einen ersten, äußeren druckstabilen Behälter (51) und in diesem einen zweiten, flexiblen Behälter (52) aufweist, **dadurch gekennzeichnet, dass** der Fliehkraftabscheider senkrecht positioniert ist, so dass der zweite Auslass (12) zum Entfernen der festen Partikel am unteren Ende des Fliehkraftabscheiders (10) liegt, wobei der zweite, flexible Behälter (52) eine Öffnung aufweist und an dem unteren Abschnitt (16) des Fliehkraftabscheiders (10) befestigt ist und der untere Abschnitt (15) zumindest teilweise durch die Öffnung des zweiten, flexiblen Behälters (52) in diesen hineinragt, wobei der zweite, flexible Behälter (52) und der untere Abschnitt (15) des Fliehkraftabscheiders (10) dicht und reversibel miteinander verbunden sind, wobei der zweite Auslass (12) zum Entfernen der festen Partikel eine Prallplatte (14) aufweist.

2. Abtrennvorrichtung (100) nach Anspruch 1 zur Abtrennung fester Partikel (72) aus einem Kühlschmierstoff (71), wobei der Fliehkraftabscheider ein Hydrozyklon (10) ist, wobei der erste Auslass (11) zum Entfernen des Kühlschmierstoffs (71) dient.

3. Abtrennvorrichtung (100) nach einem der vorhergehenden Ansprüche zur Abtrennung fester Partikel (72) aus einem Kühlschmierstoff (71) einer Werkzeugmaschine, insbesondere Zerspanungsmaschine (300).

4. Abtrennvorrichtung (100) nach einem der vorhergehenden Ansprüche, wobei es sich bei den festen Partikeln (72) um Partikel mit einer Dichte von mindestens 2,0 g/cm³ handelt.

5. Abtrennvorrichtung (100) nach einem der vorhergehenden Ansprüche, wobei es sich bei den festen Partikeln (72) um Grafitpartikel, Silicatpartikel und/oder Bleipartikel handelt.

6. Abtrennvorrichtung (100) nach einem der vorhergehenden Ansprüche, wobei der Auffangbehälter (50) mit einer Wägeeinrichtung (53) versehen ist.

7. Abtrennvorrichtung (100) nach einem der vorhergehenden Ansprüche, wobei die Prallplatte (14) über zwei bis vier Bügel (15) an einem unteren Abschnitt (16) des Fliehkraftabscheiders (10), insbesondere Hydrozyklons (10) befestigt ist.

8. Abtrennvorrichtung (100) nach einem der vorhergehenden Ansprüche, wobei der Auffangbehälter (50), insbesondere der erste, äußeren druckstabile Behälter (51) ein Belüftungs-Entleerungsventil (54) aufweist.

9. Verwendung einer Abtrennvorrichtung (100) nach einem der Ansprüche 1 bis 8 zur Abtrennung fester Partikel (72) aus einem Kühlschmierstoff (71), insbesondere von Partikel mit einer Dichte von mindestens 2,0 g/cm³ (72) aus einem Kühlschmierstoff (71) einer Werkzeugmaschine (300), insbesondere Zerspanungsmaschine (300).

10. Werkzeugmaschine (300), umfassend eine Abtrennvorrichtung (100) zur Abtrennung fester Partikel (72) aus einer Flüssigkeit (71), umfassend einen Fliehkraftabscheider (10) und einen Auffangbehälter (50), wobei der Fliehkraftabscheider (10) einen tangentialen Einlass (13), einen ersten Auslass (11) zum Entfernen der Flüssigkeit (71) und einen zweiten Auslass (12) zum Entfernen der festen Partikel (72) aufweist, **dadurch gekennzeichnet, dass** der Auffangbehälter (50) mit dem Fliehkraftabscheider (10) reversibel verbunden ist, wobei die Werkzeugmaschine (300) eine Zerspanungsmaschine (300) ist und eine Lagerwanne (350) aufweist, die einen Zulauf und einen Ablauf zur Abtrennvorrichtung (100) hat, wobei die Abtrennvorrichtung (100) eine Abtrennvorrichtung nach einem der Ansprüche 1 bis 8 ist.

11. Werkzeugmaschine (300) nach Anspruch 10, wobei die Zerspanungsmaschine (300) einen Zulauf zu einem Vorfilter (351) hat und wobei der Vorfilter (351) einen Zulauf zu der Lagerwanne (350) hat.

12. Verfahren zum Abtrennen fester Partikel (72) aus einer Flüssigkeit (71), aufweisend folgende Schritte:
a) Einleiten einer feste Partikel (72) haltigen Flüssigkeit (71), über den einen tangentialen Einlass (13) in den Fliehkraftabscheider (10) einer Abtrennvorrichtung (100) nach einem der Ansprüche 1 bis 8,
b) Abtrennen der festen Partikel (72) durch Ausleiten der festen Partikel (72) durch den zweiten Auslass (12) aus dem Fliehkraftabscheider (10) in den Auffangbehälter (50),
c) und Ausleiten der Flüssigkeit (71) durch den ersten Auslass (11) aus dem Fliehkraftabscheider (10).

13. Verfahren nach Anspruch 12, wobei die Flüssigkeit ein Kühlschmierstoff (71) ist.

## Claims

1. Separation device (100) for separating solid particles (72) from a liquid (71) comprising a centrifugal separator (10) and a collection vessel (50), the centrifugal separator (10) having a tangential inlet (13), a first outlet (11) for removing the liquid (71) and a second outlet (12) for removing the solid particles (72), **characterized in that** the collecting vessel (50) is reversibly connected to the centrifugal separator (10), the collecting vessel (50) having a first, outer pressure-stable vessel (51) and, inside the latter, a second, flexible vessel (52), **characterized in that** the centrifugal separator is positioned vertically so that the second outlet (12) for removing the solid particles is located at the lower end of the centrifugal separator (10), wherein the second, flexible vessel (52) has an opening and is attached to the lower portion (16) of the centrifugal separator (10), and the lower portion (15) is at least partially inserted through the opening of the second, flexible vessel (52), the second flexible vessel (52) and the lower portion (15) of the centrifugal separator (10) being sealingly and reversibly connected to each other, wherein the second outlet (12) comprises a baffle plate (14) for removing the solid particles.

2. Separation device (100) according to claim 1 for separating solid particles (72) from a cooling lubricant (71), wherein the centrifugal separator is a hydrocyclone (10), wherein the first outlet (11) is for removing the cooling lubricant (71).

3. Separation device (100) according to one of the preceding claims for separating solid particles (72) from a cooling lubricant (71) of a tooling machine, in particular a cutting machine (300).

4. Separation device (100) according to any one of the preceding claims, wherein the solid particles (72) are particles with a density of at least 2.0 g/cm³.

5. Separation device (100) according to any one of the preceding claims, wherein the solid particles (72) are graphite particles, silicate particles and/or lead particles.

6. Separation device (100) according to any one of the preceding claims, wherein the collection vessel (50) is provided with a weighing device (53).

7. Separation device (100) according to one of the preceding claims, wherein the baffle plate (14) is attached to a lower section (16) of the centrifugal separator (10), in particular hydrocyclone (10), via two to four brackets (15).

8. Separation device (100) according to any one of the preceding claims, wherein the collection vessel (50), in particular the first, outer pressure-stable vessel (51) has a venting-emptying valve (54).

9. Use of a separation device (100) according to one of claims 1 to 8 for separating solid particles (72) from a cooling lubricant (71), in particular particles with a density of at least 2.0 g/cm³ (72) from a cooling lubricant (71) of a tooling machine (300), in particular a cutting machine (300).

10. A tooling machine (300) comprising a separation device (100) for separating solid particles (72) from a liquid (71), comprising a centrifugal separator (10) and a collecting vessel (50), wherein the centrifugal separator (10) has a tangential inlet (13), a first outlet (11) for removing the liquid (71) and a second outlet (12) for removing the solid particles (72), **characterized in that** the collection vessel (50) is reversibly connected to the centrifugal separator (10), wherein the tooling machine (300) is a cutting machine (300) and has a storage tub (350) having an inlet and an outlet to the separation device (100), wherein the separation device (100) is a separation device according to one of claims 1 to 8.

11. Tooling machine (300) according to claim 10, wherein the cutting machine (300) has an inlet to a pre-filter (351) and wherein the pre-filter (351) has an inlet to the storage tub (350).

12. Method of separating solid particles (72) from a fluid (71), comprising the steps of:
a) introducing a liquid (71) containing solid particles (72), via the one tangential inlet (13) into the centrifugal separator (10) of a separation device (100) according to any one of claims 1 to 8,
b) separating the solid particles (72) by discharging the solid particles (72) through the second outlet (12) from the centrifugal separator (10) into the collection vessel (50),
c) and discharging the liquid (71) through the first outlet (11) from the centrifugal separator (10).

13. Method according to claim 12, wherein the liquid is a cooling lubricant (71).

## Revendications

1. Dispositif de séparation (100) pour la séparation de particules solides (72) d'un liquide (71), comprenant un séparateur centrifuge (10) et un récipient collecteur (50), le séparateur centrifuge (10) ayant une entrée tangentielle (13), une première sortie (11) pour éliminer le liquide (71) et une deuxième sortie (12) pour éliminer les particules solides (72), **caractérisé en ce que** le récipient collecteur (50) est relié de manière réversible au séparateur centrifuge (10), le récipient collecteur (50) ayant un premier récipient extérieur (51) résistant à la pression et, dans celui-ci, un deuxième récipient flexible (52), **caractérisé en ce que** le séparateur centrifuge est positionné verticalement de sorte que la deuxième sortie (12) pour éliminer les particules solides se trouve à l'extrémité inférieure du séparateur centrifuge (10), le deuxième récipient flexible (52) ayant une ouverture et étant fixé à la partie inférieure (16) du séparateur centrifuge (10) et la partie inférieure (15) passant au moins partiellement par l'ouverture du deuxième récipient flexible (52), le deuxième récipient flexible (52) et la partie inférieure (15) du séparateur centrifuge (10) étant reliés entre eux de manière étanche et réversible, la deuxième sortie (12) ayant une plaque d'impact (14) pour éliminer les particules solides.

2. Dispositif de séparation (100) selon la revendication 1 pour la séparation de particules solides (72) d'un réfrigérant lubrifiant (71), le séparateur centrifuge étant un hydrocyclone (10), la première sortie (11) servant à éliminer le réfrigérant lubrifiant (71).

3. Dispositif de séparation (100) selon l'une des revendications précédentes pour la séparation de particules solides (72) d'un réfrigérant lubrifiant (71) d'une machine-outil, en particulier d'une machine d'enlèvement de copeaux (300).

4. Dispositif de séparation (100) selon l'une des revendications précédentes, dans lequel les particules solides (72) sont des particules ayant une densité d'au moins 2,0 g/cm³.

5. Dispositif de séparation (100) selon l'une des revendications précédentes, dans lequel les particules solides (72) sont des particules de graphite, des particules de silicate et/ou des particules de plomb.

6. Dispositif de séparation (100) selon l'une quelconque des revendications précédentes, dans lequel le récipient collecteur (50) est muni d'un dispositif de pesage (53).

7. Dispositif de séparation (100) selon l'une des revendications précédentes, dans lequel la plaque d'impact (14) est fixée par l'intermédiaire de deux à quatre étriers (15) à une partie inférieure (16) du séparateur centrifuge (10), en particulier de l'hydrocyclone (10).

8. Dispositif de séparation (100) selon l'une quelconque des revendications précédentes, dans lequel le un récipient collecteur (50), en particulier le premier récipient extérieur (51) résistant à la pression, ayant une vanne d'aération et de vidange (54).

9. Utilisation d'un dispositif de séparation (100) selon l'une des revendications 1 à 8 pour la séparation de particules solides (72) d'un réfrigérant lubrifiant (71), en particulier de particules ayant une densité d'au moins 2,0 g/cm³ (72) d'un réfrigérant lubrifiant (71) d'une machine-outil (300), en particulier d'une machine d'enlèvement de copeaux (300).

10. Machine-outil (300) comprenant un dispositif de séparation (100) de séparation des particules solides (72) d'un liquide (71), comprenant un séparateur centrifuge (10) et un récipient collecteur (50), le séparateur centrifuge (10) ayant une entrée tangentielle (13), une première sortie (11) pour éliminer le liquide (71) et une deuxième sortie (12) pour éliminer les particules solides (72), **caractérisé en ce que** le récipient collecteur (50) est relié de manière réversible au séparateur centrifuge (10), la machine-outil (300) étant une machine d'enlèvement de copeaux (300) et ayant un bac de stockage (350) ayant une entrée et une sortie vers le dispositif de séparation (100), le dispositif de séparation (100) étant un dispositif de séparation selon l'une des revendications 1 à 8.

11. Machine-outil (300) selon la revendication 10, dans laquelle la machine d'enlèvement de copeaux (300) a une entrée vers un préfiltre (351) et dans laquelle le préfiltre (351) a une entrée vers le bac de stockage (350).

12. Procédé de séparer des particules solides (72) d'un liquide (71), ayant les étapes suivantes :
a) introduire un liquide (71) contenant des particules solides (72), par l'intermédiaire d'une entrée tangentielle (13), dans le séparateur centrifuge (10) d'un dispositif de séparation (100) selon l'une quelconque des revendications 1 à 8,
b) séparer les particules solides (72) en évacuant les particules solides (72) par la deuxième sortie (12) du séparateur centrifuge (10) dans le récipient collecteur (50),
c) et en évacuant le liquide (71) par la première sortie (11) du séparateur centrifuge (10).

13. Procédé selon la revendication 12, dans lequel le liquide est un réfrigérant lubrifiant (71).
